# EUROPEAN PATENT SPECIFICATION

(11) **EP 3 281 387 B1**
(45) Date of publication and mention of the grant of the patent: **10.06.2020**
(21) Application number: 16714879.0
(22) Date of filing: 06.04.2016
(51) Int. Cl.: H04L 29/08, H04L 29/06

(54) **METHOD OF CONFIGURING A SMART MOBILE DEVICE FOR REMOTE CONTROL OF A TARGET PROCESS**
VERFAHREN ZUR KONFIGURATION EINER INTELLIGENTEN MOBILEN VORRICHTUNG ZUR FERNSTEUERUNG EINES ZIELPROZESSES
PROCÉDÉ DE CONFIGURATION D'UN DISPOSITIF MOBILE INTELLIGENT POUR LA COMMANDE À DISTANCE D'UN PROCESSUS CIBLE

(30) Priority: 10.04.2015 EP 15163146
(43) Date of publication of application: 14.02.2018
(73) Proprietor: Canon Production Printing Netherlands B.V., 5914 CA Venlo (NL)
(72) Inventor: REGEP, Dan M., 5914 CA Venlo (NL)
(74) Representative: Canon Production Printing IP Department
(86) International application number: PCT/EP2016/057464
(87) International publication number: WO 2016/162347

(56) References cited:
- US-A1- 2012 220 282
- US-A1- 2013 019 284
- US-A1- 2014 187 149

## Description

The invention relates to a method of configuring a smart mobile device for remote control of a target process, the device comprising a tag reader, an interface to a communications network, and an operating system capable of dispatching a URI to be handled by a URI handler selected from among a plurality of URI handlers that are installed on the mobile device.

In the meaning of the present invention, a "target process" may be any process that is performed by means of a technical equipment such as a machine or a data processing system. For example, the target process may be the operation of a printer, the operation of a door opening and closing system, a software service offered on the Internet or a corporate network, or the like.

A "smart mobile device" in the meaning of the invention is a device that is capable of connecting to a communications network via a wireless communication channel such as a mobile telephone network (2G, 3G, Wi-Max, LTE or the like), Wi-Fi, Bluetooth, RFID, infrared or sound communication channels, or the like. The mobile device is considered to be "smart" in the sense that is contains data processing and storing hardware controlled by an operating system, so that it is possible to install and run software applications (APPs) on the mobile device. Examples of smart mobile devices are smartphones and intelligent RFID tags.

As is generally known in the art, a smart mobile device may include a tag reader that is capable of reading a data tag. The data tag may be any physical medium that stores encoded data in a format that can directly be read by the tag reader. Known data tags comprise image-type data tags such as QR codes, Data Matrix, bar-codes and the like, as well as radio tags such as NFC tags and the like. The data tags may be passive (non-powered) or active (powered) and may be of a read-only type or a read-write type. For example, a smartphone typically has a camera that may be used among others for capturing a photograph of an image-type data tag. Then, suitable software in the smartphone may perform the function of a tag reader.

As is commonly known, the data tagging technology may be used for example for encoding a URI (Uniform Resource Identifier) or a URL (Uniform Resource Locator) of an Internet page, so that, when the tag has been read, a web browser in the smart mobile device may connect to that Internet page.

Further, it is known that a smart mobile device may be used for remote control of a printer or any other target process, provided that a suitable control software application is installed on the mobile device. Then, the software application may for example enable a smartphone with its touch-sensitive screen to act as an operating console or user interface of the printer.

However, in order to be able to use a smart mobile device in this way, a suitable configuration of the device is prerequisite. For example, the mobile device must be configured to use the right communication channel for communication with the target process. Further, an application software must be installed that is specifically adapted to the target process, and different target processes may require different control software applications to be installed. On the other hand, the operating systems of known smart mobile devices are distinguished by their brand (e.g. Android, iOS, or the like), model, and software version. In general, the control software application must be adapted to the specific capabilities and functions of the operating system. Document US 2014/0187149 A1 discloses systems and methods directed to URI-based host to mobile device setup and pairing.

Thus, when a user wants to configure his mobile device for a given target process, the configuration procedure may turn out to be a relatively complex and cumbersome task. The user has to know which control software application is needed for the given task and which resource has to be contacted for downloading this application. Further, he has to know the model and version of his mobile operating system so as to select the control software application that matches his operating system. Then, the application must be downloaded and installed, and the mobile device must be configured for contacting the target process via the correct communication channel and under the correct address. If the target process and the related control software application are not public, a suitable authentication procedure may also be required. All these complex activities are needed for eventually controlling a process as simple as opening a door or printing a document from the mobile device.

It is therefore an object of the invention to provide a method that assists the user in configuring his mobile device for a selected target process.

The scope of the invention is defined by the appended claims.

### BRIEF DESCRIPTION OF THE DRAWINGS

The present invention will become more fully understood from the detailed description given hereinbelow and the accompanying schematic drawings which are given by way of illustration only and thus are not limitative of the present invention, and wherein:
- Fig. 1.: is block diagram of a first system embodiment arranged according to the invention;
- Fig. 2.: is a block diagram of a minimal system embodiment arranged according to the invention;
- Fig. 3.: is an UML activity diagram of a URI handler arranged according to the invention;
- Fig. 4.: is a first part of a flow diagram illustrating the configuration method steps according to the invention; and
- Fig. 5.: is the second part of the flow diagram started in Fig.4.

It shall be understood that, although the detailed description and drawings are provided by way of example and in the context of a particular embodiment, other embodiments and variations are possible and will be apparent to those skilled in the art.

The present invention will now be described with reference to the accompanying drawings, wherein the same reference numerals have been used to identify the same elements throughout the several views.

### DETAILED DESCRIPTION OF THE DRAWINGS

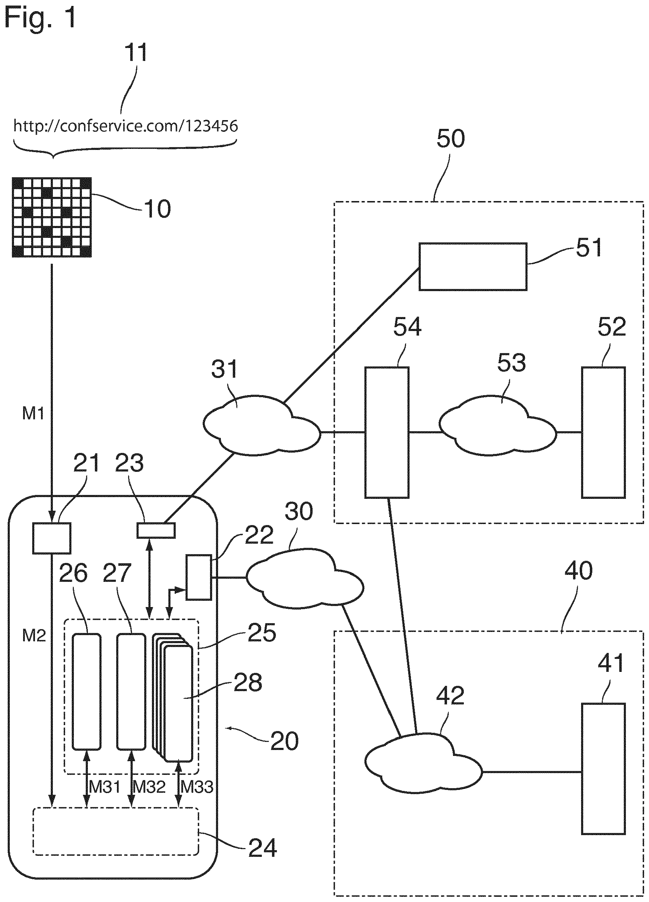

Fig. 1 shows a block diagram of a complex system embodiment arranged according to the present invention. Said embodiment is specific to private environments such as a corporate intranet where the access from a mobile device 20, e.g. a smartphone, to a target process 51, e.g. a process of operating a printer, requires the use of an access network 31 that is private and secured, and also requires the presence of a mobile application 28 that is running on the mobile device 20 and arranged for interacting with said target process 51 via the access network 31 and an access network interface 23. According to Fig. 1, a data tag 10 embedding an encoded URI 11 that is specific to the target process 51 is read (step M1) by the mobile device 20 using a data tag reader 21. Upon reading, said URI 11 is decoded and forwarded (step M2) to a mobile operating system 24 of the mobile device for further processing.

For clarity, it shall be noted that although in the presented embodiment the data tag 10 is a barcode, other data tag technologies such as RFID, NFC tags, Bluetooth Low Energy Beacons, ANT+ tags, network advertised services using protocols such as SSDP or any other well-known proximity service advertising techniques may be used as data tags in the meaning of this disclosure.

For clarity, it shall also be noted that, although the URI 11 presented in Fig. 1 is a HTTP URL, other encoding schemes, protocols and formats exceeding the limitations of the W3C URI specification may be used as a URI within the scope of the present invention as long as they can be embedded within a data tag 10 and can be forwarded to and interpreted by the operating system 24. By way of example, other embodiments may consider using other tag formats such as an NFC SMS tag comprising a specific message payload and pointing to the telephone service number of a public configuration service 41 that is exposed as an SMS listening server on the mobile data network. According to Fig. 1, upon receiving said URI 11 the operating system 24 auto selects or allows the user for manual selection of a preferred URI handler from a plurality URI handlers 25 installed on the mobile device 20, and then it activates and dispatches said input URI 11 to the preferred URI handler for further processing (step M31, M32 or M33). In the example shown, the URI handlers 25 comprise a standard web browser 26, a local configuration service 27, and a mobile client application 28. The distinguishing features and functions of the latter two URI handlers which are specifically configured for the purposes of the invention will be explained later in this description. In view of the tasks to be performed in the framework of the invention, the URI handlers have different levels of specialisation, with the web browser 26 at the lowest level and the mobile client application 28 at the highest level.

It will be noted that the proposed system requires the presence of an operating system capable to select and activate a preferred URI handler and capable to dispatch said URI to said preferred URI handler. Operating systems having these capabilities are state of the art.

According to Fig. 1, the URI handlers 25 are arranged to communicate with a public zone 40 via an initial network 30, e.g. a mobile telephone network, and an initial network interface 22. The public zone 40 comprises the above-mentioned public configuration service 41. As an alternative, the URI handlers 25 may communicate with a private zone 50 comprising the target process 51, or with a smart proxy 54 and, by means of an intranet network 53, with a private configuration service 52 storing confidential configuration data about the target process 51. The smart proxy 54 is a capped portal allowing the mobile device 20 to transparently access part of the internet 42 or intranet 53 when connected to an initial network 30 or to the access network 31, respectively.

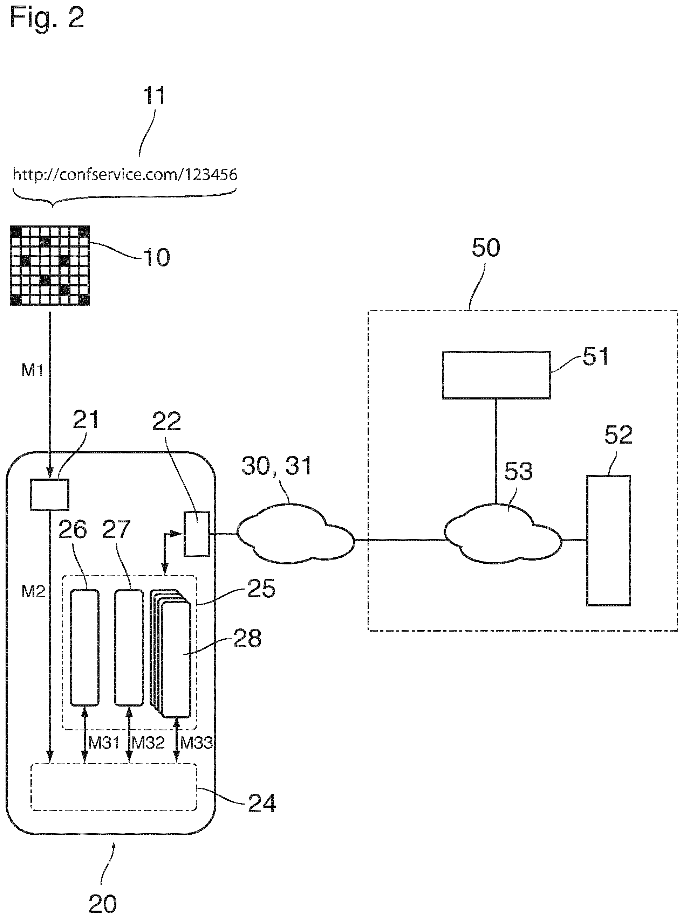

For clarity, it shall be noted that other embodiments designed with different design constraints may exhibit different topologies wherein components of the public and the private zones (as designated here by reference numerals 41, 42, 51, 52, 53, and 54) overlap or are missing. By way of example, Fig. 2 shows a block diagram of a minimal system embodiment arranged according to the present invention. This system is specific to public environments, with a public coffee dispenser system as the target process 51, for example, and is built with minimal resources. By way of example, in the embodiment depicted in Fig. 2 the configuration service 52 and the target service 51 are hosted on the internet cloud.

According to Fig. 2, when compared with the system show in Fig. 1, the private zone 50 shown in Fig. 1 is merged into the public zone 40 and, therefore the initial network 30 is also used as an access network 31 and is linked to the internet 42 using the initial network interface 22. The public configuration service 41 also comprises the functionality and configuration of the private configuration service 52 shown in Fig. 1 and the target device or process 51 is directly accessible from the internet 42 although the access itself may be secured and restricted to authenticated users and/or mobile devices 20.

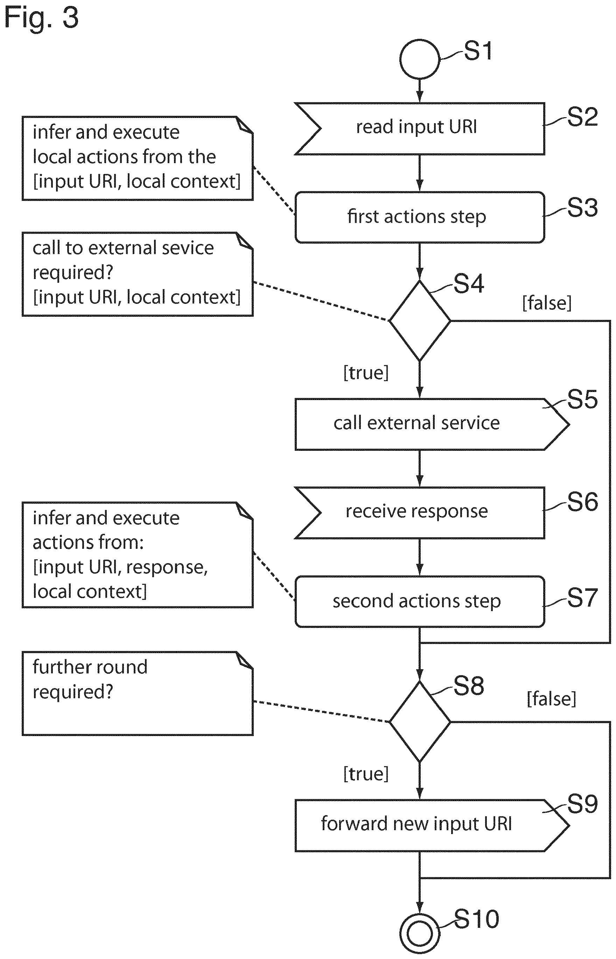

Fig. 3 is an UML activity diagram illustrating the behaviour of a URI handler which may be either the local configuration service 27 and or the mobile client application 28 shown in Fig. 1.

According to Fig. 3, the URI handler is activated in a start state S1. Upon reading an input URI in the step S2 one or more actions are inferred and executed by a first actions step S3 considering both the input URI and the local context of the URI handler. For clarity, the local context of the URI handler comprises its state and the environment and may persist over different activations of the same URI handler and/or shared with other URI handlers. By way of example, upon subsequent activations of the same URI handler using a same input URI, the first actions step S3 may produce a different set of actions having different results considering that the local context is different in the subsequent activations.

According to one aspect of the present invention, the first actions step S3 has the technical effect of executing a number of actions without any prior call to the input URI. This behaviour is different from the behaviour of other well-known URI handlers such as web browsers where actions can be inferred and executed only after the input URI has been called at least once and when the response has been received. Further, the technical effect of the step S3 is different from the effect of a known web browser caching mechanism since both the content of the input URI and the local context determine the actions that need to be executed in the first actions step S3. Further, the function of the first actions step S3 is the execution of configuration and/or workflow actions required on the mobile device 20 for the interaction with the target process 51 shown in Fig. 1. This function is different from caching and has a different technical effect.

According to Fig. 3, the URI handler determines in a first decision step S4 weather a call to an external service is required for receiving further information or for triggering remote commands. For clarity, said external service is one of the configuration services 41, 52 and the target process 51 shown in Fig. 1.

According to one aspect of the present invention, said first decision step S4 shown in Fig. 3 determines whether a call to said external service is required by considering both the input URI and the local context of the URI handler. Therefore, the technical effect of the first decision step S4 is that the external service is called only when (a) the input URI is present but comprises insufficient configuration information, when (b) the local context comprises insufficient information for allowing the interaction of the mobile device 20 with the target process 51, and/or when (c) said external service needs to be triggered.

For clarity, the behaviour of a conventional URI handler such as a web browser performing a cache decision before actually calling an input URI is different than the decision step S4 since the first decision step S4 is applicable to any URI and not restricted to already visited ones and in the sense that the first decision step S4 considers both the content of the input URI and the local context of the URI handler which is broader than an URI cache lookup. For further clarity and by way of example, compared to a web browser that will always try to call a new input URI, an URI handler arranged according to the present invention may decide not to call said URI considering a parameter encoded in the input URI and/or considering the local context.

According to Fig. 3, a step S5 of calling an external service, a step S6 of receiving a response, and a step S7 of executing a second actions step are the same as in other well-known URI handlers such as web browsers.

According to Fig. 3, a second decision step S8 determines whether a further configuration round is required to be performed by the same or by a different URI handler using a new input URI determined or received in the current round.

According to one aspect of the present invention, the new input URI required for starting a further configuration or workflow round using the same or different URI handler can also be determined in the first actions step S3 considering both the input URI and the URI handler local context and without requiring to call the external service for a response. As will be noticed by a person skilled in the art, the above mentioned behaviour is not implemented within known URI handlers such as Web browsers where the a new URI is received either in the step S6, for example as a HTTP 302 redirection request response, or where it is determined in the second actions step S7, for example by executing an HTML JavaScript function browsing to a new location that has been embedded in the response.

According to Fig. 3, depending upon the result of the second decision step S8, a forwarding step S9 forwards the new input URI to the operating system 24 (Fig. 1) for further processing. The new input URI is further used in a new configuration or workflow round.

Finally, according to Fig. 3, the state S10 models the end of the current configuration or workflow round started in the state S1 and allows the URI handler to close or to perform further specific actions that are out of the scope of this invention.

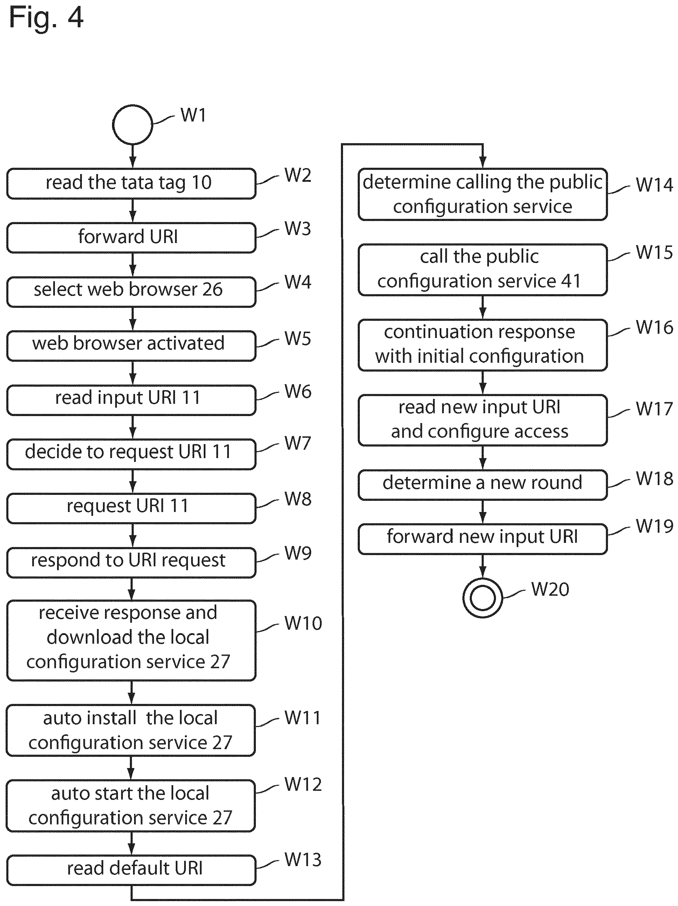

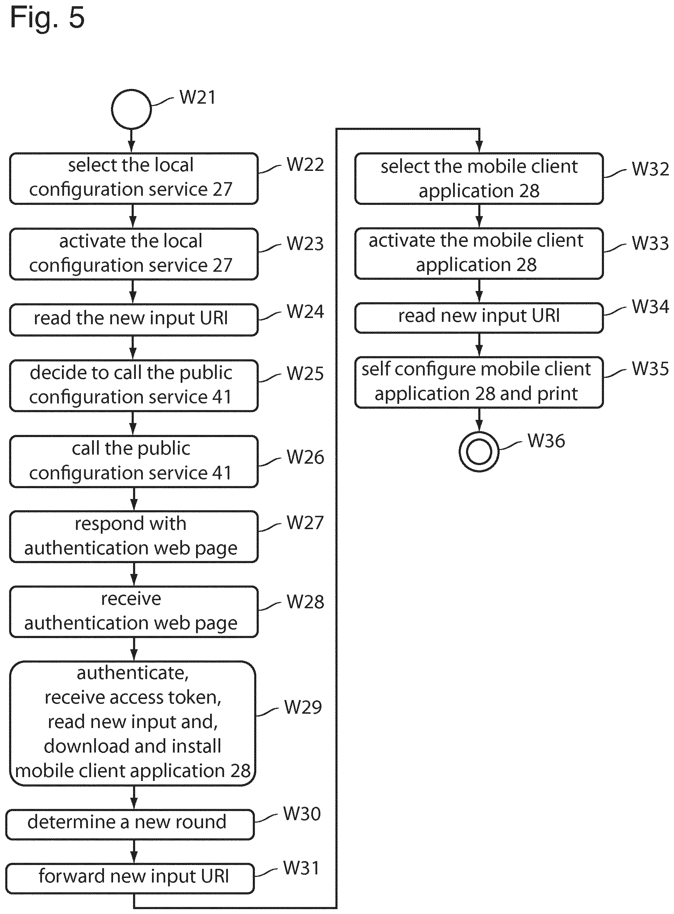

Figs. 4 and Fig. 5 show, in the form of an UML activity diagram, an example of a sequential configuration workflow that is specific to the system shown in Fig. 1 and that involves the URI handlers 25 shown in Fig. 1 arranged to perform specific configuration rounds. Each round is triggered by an input URI in step M31, M32, or M33, and said configuration rounds are compliant with the general behaviour illustrated in Fig. 3.

For clarity, although this embodiment is presented as an example using specific choices relating to the data tag technology, the URI encoding format and protocols, it will be understood that the sequence and choice of the workflow steps and other details serve only as an illustrative example these choices do not constitute limitations or indispensable features of the invention.

The configuration workflow shown in Fig. 4 and Fig. 5 will now be detailed hereinbelow using references to numerals shown in Fig. 1 and Fig. 3.

According to Fig. 4 and by way of example, in a starting step W1 a user having the mobile device 20 is positioned in the proximity of a target process 51 which shall be considered to be a printer. The user wants to print a document from his mobile device 20 without knowing how to configure the network access, what mobile application to install and how to configure it for pairing with said target process 51.

According to Fig. 4 and by way of example, in a step W2 the user uses the tag reader 21 (e.g. a barcode scanner) that is available on the mobile device 20 and scans the data tag 10 that is a QR-Code label attached to the printer. The data tag 10 encodes a URI 11 which may be a so-called tiny URL pointing to the public configuration service 41. The data tag 10 comprises also the printer's unique identifier encoded in the URI path as a numeral. For clarity, the printer identifier is not a confidential information since no information is disclosed about the model type, version, location or the authority hosting said printer, and it may therefore be publicly shared without any security risks. Moreover, the printer is not accessible from the internet 42 but only when using the dedicated access network 31 that is a secured proximity Wi-Fi network.

According to Fig. 4 and by way of example, in the step W3 the tag reader 21 forwards the URI 11 to the operating system 24 for further processing.

According to Fig. 4 and by way of example, in the step W4 the mobile operating system 24 auto selects the web browser 26 that is the sole URI handler currently installed and that is arranged for handling URLs.

According to Fig. 4 and by way of example, the first configuration round starts with the step W5 when the web browser 26 is activated in the state S1 by the operating system 24. Further, in the step W6, corresponding to the step S2, the web browser 26 reads the input URI served by the operating system 24 (step M31 in Fig. 1).

According to Fig. 4 and by way of example, in the step W7 the web browser forcedly decides to access the external service that is the public configuration service 41 exposed on the internet 42 using the network interface 22 and the initial network 30 that is the mobile data network. For clarity, the first decision step S4 shown in Fig. 3 does not exist for the web browser 26 that will always access a web resource pointed at by said input URI 11.

According to Fig. 4 and by way of example, in the step W8 the input URI 11 is requested, corresponding to the step S5.

According to Fig. 4 and by way of example, in the step W9 the public configuration service 41 receives the URI 11 request and infers a response. The public configuration service 41 is arranged to serve a response considering the requested input URI 11 and its local context comprising its state and environment. By way of example, the public configuration service 41 receiving the URI 11 request from the web browser 26 looks up the HTTP User-Agent from the request and consequently detects the model and version of the operating system 24 and the fact that the request is initiated by a web browser 26 and not by a specialized URI handler. As a consequence and by way of example, the public configuration service 41 provides a HTTP redirection request response comprising a redirection URI pointing to the download location of the local configuration service 27 specific to the model and version of the operating system 24. Alternatively and by way of example, the response may comprise a web page with a download link and a message allowing the user to decide whether he wants to continue installing the local configuration service 27 or abort.

According to Fig. 4 and by way of example, in the step W10, corresponding to the step S6, the web browser 26 receives the HTTP redirection request response pointing to the download location of the local configuration service 27 and downloads it according to the step S7.

According to Fig. 4 and by way of example, in the step W11 the downloaded local configuration service 27 is auto installed by the operating system 24. For clarity, the installation procedure depends on the model of the operating system 24, which may require the user to manually accept and/or install said local configuration service 27.

According to Fig. 4 and by way of example, in the step W12 the local configuration service 27 is activated automatically by the operating system 24. Therefore, the step W12 embodies the starting state S1 and marks the beginning of a second configuration round using a different URI handler, in this case the local configuration service 27.

According to Fig. 4 and by way of example, in the step W13 (step M32 in Fig. 1) the local configuration service 27 reads the input URI that in this particular case is missing since said service is automatically started upon installing. Consequently, the input URI is set to a fallback default value embedded within said local configuration service 27, said default URI pointing to the public configuration service 41 and not having an identifier of target process 51 encoded in the path. Further, the local configuration service 27 skips the first actions step S3 since the default URI and initial state do not have specific configuration information and therefore no specific configuration actions can be inferred and performed.

According to Fig. 4 and by way of example, in the step W14 the local configuration service 27 decides according to the step S4 to call the public configuration service 41 pointed at by the default URI for receiving additional configuration information. The call to the public configuration service 41 is further performed in the step W15 corresponding to the step S5.

According to Fig. 4 and by way of example, in the step W16 the public configuration service 41 receiving the call from the local configuration service 27 determines that request was made from a mobile device by a local configuration service, that the identifier of the target process 51 is unknown since it is not specified in the request, and that a previous request coming from the same mobile device 20 having the same operating system 24 has recently been made (in the step W8). By way of example, the public configuration service 41 determines the model and version of the operating system 24 of the requesting device 20 by looking up the HTTP User-Agent of the request, it determines that the requested URI does not have encoded in the path the identifier of the target process 51 and determines by looking up in the recent requests history that the same mobile device 20, using the same mobile operating system 24 has requested configuration details about the target process 51 using a web browser 26. Consequently, the public configuration service considers this request as a continuation of the request in step W8 and determines that the request is performed using the local configuration service 27 that, contrary to the web browser 26, is able to configure and access a network that is different from the initial network 30 and is arranged for user authentication. Therefore, the public configuration service 41 provides in the response further configuration details for configuring the access network 31 and a redirection URI to be used as a new input URI for a further configuration round. By way of example, the response comprises information about the access network 31 that in this particular example is a private WIFI network that is secured by using the WPA2 protocol and is protected by a given password. The response also comprises a new input URI that is the same as the input URI 11 shown in Fig. 1.

According to Fig. 4 and by way of example, in the step W17 the response is received by the local configuration service 27, this step corresponding to the step S6. The received configuration information is used for configuring the access network interface 23 and for switching the network from the initial network 30 to the access network 31 according to the step S7. In addition, in the same step S7 the new input URI is read from the received response.

According to Fig. 4 and by way of example, in the step W18 the local configuration service 27 determines in accordance with the step S8 that a further configuration round is required due to the presence of a new input URI received in the previous step W17. Therefore, in the step W19 said new input URI is forwarded to the operating system 24 for further processing (corresponding to step S9). The current configuration round ends in the step W20 corresponding to the state S10.

Fig. 5 continues the workflow from Fig. 4, and the step W21 is the same as the step W20.

According to Fig. 5 and by way of example, in the step W22 the operating system 24 selects a URI handler for handling the new input URI issued in the step W19. For clarity, although said new input URI read in step W17 is the input URI 11, the selected URI handler is different since the local configuration service 27 has been installed and registered as a more specialized URI handler for handling URIs pointing to the public configuration service 41. Therefore, the selected URI handler is the local configuration service 27 and no longer the web browser 26 as it was the case in the step W4. The local configuration service 27 is further re-activated in the step W23 that corresponds to the state S1 of a new configuration round.

According to Fig. 5 and by way of example, in the step W24 the new input URI that is the same as the input URI 11 is read by the local configuration service 27 according to the step S2 (step M32 in Fig. 1). The first actions step S3 is skipped as the new input URI does not comprise additional configuration information other than the address of the public configuration service 41 and the identifier of the target process 51 encoded in the URI as a numeric path.

According to Fig. 5 and by way of example, in the step W25 the local configuration service 27 determines according to the step S4 to call the public configuration service 41 using the access network 31 for getting further configuration information specific to the target device or service 51.
According to Fig. 5 and by way of example, in the step W26, which corresponds to the step S5, the local configuration service 27 calls the public configuration service 41 using the access network 31 that has been configured in the previous round. The communication is intercepted by the smart proxy 54 and is transparently redirected towards the private configuration service 52 accessible via the intranet 53. Therefore, the local configuration service 27 having switched to the private network 31 has the impression of accessing the public configuration service 41 while actually the communication is transparently routed to the private configuration service 52 accessible on the intranet 53. This arrangement allows for protecting confidential configuration data from the public while preserving the appearance of accessing public resources.

According to Fig. 5 and by way of example, in the step W27 the private configuration service 52 having received the input URI determines that the user is unknown and needs to authenticate against a corporate access directory using a secured channel before receiving any further information related to the printer being the target process 51. Therefore, the private configuration service 52 responds with a secured authentication web page comprising an authentication form.

According to Fig. 5 and by way of example, in the step W28 the local configuration service 27 receives the authentication page, in accordance with the step S6.

According to Fig. 5 and by way of example, in the step W29, corresponding to the step S7, the local configuration service 27 displays the authentication form, and when the user fills the form it sends the authentication data to the private configuration service 52 acting on behalf of the public configuration service 41 for further validation against the corporate access directory. In the same step, the private configuration service 41 having authenticated the user provides a response comprising an authentication token and further details required for accessing said printer. By way of example, the provided configuration information includes the download URI of the mobile client application 28 and a new input URI to be used as an input URI in a further configuration round (step M33 in Fig. 1) that will be handled by the mobile application 28. Further in the same step W29 and in accordance with the step S7, the local configuration service 27 downloads the mobile client application 28 using the secured access network 31 and the smart proxy 54 that allows the download of said mobile client application 28 from a store deployed on the internet 42 or on the intranet 53. Further in the same step, upon download completion the local configuration service 27 triggers the operating system for installing the mobile client application 28. For clarity, in an alternative embodiment, when design constraints of the mobile operating system 24 allow, the step W29 would further comprise the installation, configuration and startup of the mobile client application 28. However, as a person skilled in the art will notice, mobile operating system technical limitations and design usually forbid unauthorized installations and out of the application configuration and therefore the current embodiment is preferred as being less restrictive. For further clarity, the complexity and number of actions performed in the step W29 according to the step S7 can vary from zero to any other value and therefore the granularity of a configuration round may be coarse grained or fine grained depending on the operating system 28 design constraints.

According to Fig. 5 and by way of example, in the step W30 corresponding to the step S8 the local configuration service 27 determines that a new configuration round is required for starting and configuring the mobile client application 28 previously installed.

According to Fig. 5 and by way of example, in the step W31, corresponding to the step S9, the new input URI determined in the step W29 is forwarded by the local configuration service 27 to the mobile operating system 24 for starting a new configuration round (step M33 in Fig. 1). Further, in the same step W31 and in accordance with the step S10 the local configuration service 27 finishes execution.

According to Fig. 5 and by way of example, in the step W32 the mobile operating system 24 selects the mobile client application 28 as the URI handler that is registered for processing the new input URI. For clarity, the new input URI can be identical to the input URI 11 when the mobile client application 28 is registered upon install as a more preferred URI handler than the local configuration service 27. For clarity, in a preferred embodiment the local configuration service 27 and the mobile client application 28 will both be registered as URI handlers for different URI formats and content.

According to Fig. 5 and by way of example, in the step W33 the mobile operating system 24 activates the mobile client application 28 that is placed into the state S1. According to Fig. 5 and by way of example, in the step W34, corresponding to the step S2, the mobile client application 28 reads the new input URI (M33) comprising the host name and model of the target process 51 (i.e. the printer).

According to Fig. 5 and by way of example, in the step W35 corresponding to the step S3 the mobile client application configures the printer model and address, and the user is allowed to use the configured application for controlling the target process 51, i.e. for printing.

According to Fig. 5 and by way of example, in the step W36 the mobile client application decides in accordance with to the steps S4 and S8 that a call to an external service is not required and that no further configuration round is required and, as a consequence the mobile client application 28 is placed in the state 10 that finishes the configuration.

## Claims

1. A method of configuring a smart mobile device (20) for remote control of a target process (51), the configuring executed by a local configuration service (27) which is a URI handler, the device comprising a tag reader (21), an interface (22, 23) to a communications network (30, 31), and an operating system (24) capable of dispatching a URI to be handled by a URI handler selected from among a plurality of URI handlers that are installed on the mobile device including the local configuration service (27), the method being **characterized in that** the local configuration service performs the steps of:
- receiving a specific URI (11) that is related to the target process (51),
- connecting, via the communications network (30, 31) and on the basis of parameters inferred from the received URI (11), to an external configuration service (41, 52) for downloading a mobile client application (28) for controlling the target process (51), said mobile client application being another URI handler, and
- returning said specific URI (11) to the operating system (24), thereby causing said operating system to call up the mobile client application (28).

2. A method of configuring a smart mobile device (20) for remote control of a target process (51), the device comprising a tag reader (21), an interface (22, 23) to a communications network (30, 31), and an operating system (24) capable of dispatching a URI to be handled by a URI handler selected from among a plurality of URI handlers that are installed on the mobile device, the method being **characterized by** the steps of:
- reading, with the tag reader (21), a data tag (10) that is associated with the target process (51) and includes the specific URI (11) to be dispatched by the operating system;
- installing, on the mobile device, a local configuration service (27) which is a URI handler which, when executed on a processor, performs the method of claim 1.

3. The method according to claim 1 or 2, wherein the mobile device (20) is capable of accessing the configuration service (41, 52) via an initial network (30) and of accessing the target process (51) via a different access network (31), and wherein communication is switched from the initial network (30) to the access network (31) under the control of the local configuration service (27).

4. The method according to claim 1, 2, or 3, wherein the mobile device (20) is capable of communicating with the external configuration service (41, 52) also via the access network (31), and the access network (31) is used for downloading the mobile client application (28) to the mobile device (20).

5. The method according to any of the preceding claims, wherein the local configuration service (27) and the mobile client application (28) are configured to execute a workflow scheme that comprises:
- a step (S2) of reading a URI,
- a step (S3) of executing local actions inferred from the URI and a local context;
- a step (S4) of deciding whether or not an external service is to be called; and
- a step (S8) of deciding whether the workflow is to stop or whether to output another URI to the operating system (24) for executing another round of the workflow scheme by the operating system (24) dispatching the other URI to a URI handler.

6. The method according to any of the preceding claims, wherein the mobile device (20) communicates with the configuration service (41, 52) via one of a mobile telephone link, e-mail and SMS.

7. Computer program code that, when executed by a processor, executes a method according to any of the preceding claims.

8. A non-transient computer readable memory comprising the computer program code of claim 7.

9. A system for configuring a smart mobile device (20) for remote control of a target process (51), which mobile device comprises a tag reader (21), an interface (22, 23) to a communications network (30, 31), and an operating system (24) capable of dispatching a URI to be handled by a URI handler selected from among a plurality of URI handlers that are installed on the mobile device, **characterized by** comprising:
- a mobile client application (28) for controlling the target process (51), the mobile client application being a URI handler that is downloadable into the mobile device (20) via the communications network (30, 31);
- a local configuration service (27) which is downloadable into the mobile device (20) via the communications network (30, 31) and which is a URI handler capable of:
- parsing a specific URI (11) that is related to the target process (51),
- connecting, via the communications network (30, 31) and on the basis of parameters inferred from the parsed URI (11), to an external configuration service (41, 52) for downloading the mobile application (28), and
- returning said specific URI (11) to the operating system (24), thereby causing the same to call up the mobile client application (28); and
- a data tag (10) assigned to the target process (51) and having encoded therein a network address of the external configuration service (41, 52) as well as a process ID of the target process (51).

10. A smart mobile device (20) comprising a tag reader (21), an interface (22, 23) to a communications network (30, 31), and an operating system (24) capable of dispatching a URI to be handled by a URI handler selected from among a plurality of URI handlers that are installed on the mobile device, **characterized by** comprising:
- a data tag reader (21) for reading a data tag (10) assigned to an external target process (51), the target process (51) to be remotely controlled by the mobile device (20), the data tag (1) having encoded therein a network address of an external configuration service (41, 52) as well as a process ID of the target process (51).
- a local configuration service (27) which is downloadable into the mobile device (20) via the communications network (30, 31) and which is a URI handler capable of:
- parsing a specific URI (11) that is related to the target process (51),
- connecting, via the communications network (30, 31) and on the basis of parameters inferred from the parsed URI (11), to the external configuration service (41, 52) for downloading a mobile application (28) for controlling the target process (51), the mobile client application being a URI handler that is downloadable into the mobile device (20) via the communications network (30, 31), and
- returning said specific URI (11) to the operating system (24), thereby causing the same to call up the mobile client application (28).

11. The smart mobile device (20) of claim 10, wherein the local configuration service (27) and the mobile client application (28) are configured to execute a workflow scheme that comprises:
- a step (S2) of reading a URI,
- a step (S3) of executing local actions inferred from the URI and a local context;
- a step (S4) of deciding whether or not an external service is to be called; and
- a step (S8) of deciding whether the workflow is to stop or whether to output another URI to the operating system (24) for executing another round of the workflow scheme by the operating system (24) dispatching the other URI to a URI handler.

12. The system according to 9, wherein the data tag (10) is an image-type data tag.

13. The system according to claim 9 or 12, wherein the mobile device (20) is a smartphone.

14. The smart mobile device (20) according to claim 10 or 11, wherein the data tag (10) is an image-type data tag.

15. The smart mobile device (20) according to claim 10, 11, or 14, wherein the mobile device (20) is a smartphone.

## Patentansprüche

1. Verfahren zur Konfiguration einer intelligenten mobilen Vorrichtung zur Fernsteuerung eines Zielprozesses, wobei die Konfiguration von einem lokalen Konfigurationsdienst (27) ausgeführt wird, der ein URI-Handler ist, welche Vorrichtung einen Etikettenleser (21), eine Schnittstelle (22, 23) zu einem Kommunikationsnetzwerk (30, 31) und ein Betriebssystem (24) aufweist, das in der Lage ist, eine URI abzusenden, die von einem URI-Handler zu behandeln ist, der ausgewählt ist unter einer Vielzahl von URI-Handlern, die auf der mobilen Vorrichtung installiert sind, einschließlich des lokalen Konfigurationsdienstes (27), welches Verfahren **dadurch gekennzeichnet ist, dass** der lokale Konfigurationsdienst die folgenden Schritte ausführt:
- empfangen einer spezifischen URI (11), die sich auf den Zielprozess (51) bezieht,
- verbinden, über das Kommunikationsnetzwerk (30, 31) und auf der Basis von Parametern, die aus der URI (11) abgeleitet sind, mit einem externen Konfigurationsdienst (41, 52) zum Herunterladen einer mobilen Client-Anwendung (28) zur Steuerung des Zielprozesses (51), wobei die mobile Client-Anwendung ein weiterer URI-Handler ist, und
- zurückmelden dieser spezifischen URI (11) an das Betriebssystem (24), wodurch das Betriebssystem veranlasst wird, die mobile Client-Anwendung (28) aufzurufen.

2. Verfahren zur Konfiguration einer intelligenten mobilen Vorrichtung (20) zur Fernsteuerung eines Zielprozesses (51), welche Vorrichtung einen Etikettenleser (21), eine Schnittstelle (22, 23) zu einem Kommunikationsnetzwerk (30, 31) und ein Betriebssystem (24) aufweist, das in der Lage ist, eine URI abzusenden, die von einem URI-Handler zu behandeln ist, der ausgewählt ist aus einer Vielzahl von URI-Handlern, die auf der mobilen Vorrichtung installiert sind, welches Verfahren **gekennzeichnet ist durch** die folgenden Schritte:
- lesen, mit dem Etikettenleser (21), eines Datenetiketts (10), das dem Zielprozess (51) zugeordnet ist und die spezifische URI (11) enthält, die durch das Betriebssystem abzusenden ist;
- installieren, auf der mobilen Vorrichtung, eines lokalen Konfigurationsdienstes (27), der ein URI-Handler ist, der, wenn er auf einem Prozessor ausgeführt wird, das Verfahren nach Anspruch 1 ausführt.

3. Verfahren nach Anspruch 1 oder 2, bei dem die mobile Vorrichtung (20) in der Lage ist, über ein initiales Netzwerk (30) auf den Konfigurationsdienst (41, 52) zuzugreifen und über ein anderes Zugangsnetzwerk (31) auf den Zielprozess (51) zuzugreifen, und wobei die Kommunikation unter der Steuerung durch den lokalen Konfigurationsdienst (27) von dem initialen Netzwerk (30) auf das Zugangsnetzwerk (31) umgeschaltet wird.

4. Verfahren nach Anspruch 1, 2 oder 3, bei dem die mobile Vorrichtung (20) in der Lage ist, mit dem externen Konfigurationsdienst (41, 52) auch über das Zugangsnetzwerk (31) zu kommunizieren, und das Zugangsnetzwerk (31) zum Herunterladen der mobilen Client-Anwendung (28) auf die mobile Vorrichtung (20) benutzt wird.

5. Verfahren nach einem der vorstehenden Ansprüche, bei dem der lokale Konfigurationsdienst (27) und die mobile Client-Anwendung (28) dazu konfiguriert sind, ein Workflowschema auszuführen, das folgendes umfasst:
- einen Schritt (S2) des Lesens einer URI,
- einen Schritt (S3) der Ausführung von lokalen Aktionen, die aus der URI und einem lokalen Kontext abgeleitet sind;
- einen Schritt (S4) der Entscheidung, ob ein externer Dienst aufzurufen ist oder nicht; und
- einen Schritt (S8) der Entscheidung, ob der Workflow angehalten werden soll oder ob eine andere URI an das Betriebssystem (24) ausgegeben werden soll, um eine andere Runde des Workflowschemas auszuführen, indem das Betriebssystem (24) die andere URI an den URI-Handler absendet.

6. Verfahren nach einem der vorstehenden Ansprüche, bei dem die mobile Vorrichtung (20) mit dem Konfigurationsdienst (41, 52) über eine mobile Telefonverbindung, E-Mail und/oder SMS kommuniziert.

7. Computerprogrammcode, der, wenn er auf einem Prozessor ausgeführt wird, ein Verfahren nach einem der vorstehenden Ansprüche ausführt.

8. Nichtflüchtiger computerlesbarer Speicher, der den Computerprogrammcode nach Anspruch 7 enthält.

9. System zur Konfiguration einer intelligenten mobilen Vorrichtung zur Fernsteuerung eines Zielprozesses, welche Vorrichtung einen Etikettenleser (21), eine Schnittstelle (22, 23) zu einem Kommunikationsnetzwerk (30, 31) und ein Betriebssystem (24) aufweist, das in der Lage ist, eine URI abzusenden, die von einem URI-Handler zu behandeln ist, der ausgewählt ist unter einer Vielzahl von URI-Handlern, die auf der mobilen Vorrichtung installiert sind, **gekennzeichnet durch**:
- eine mobile Client-Anwendung (28) zur Steuerung des Zielprozesses (51), wobei die mobile Client-Anwendung ein URI-Handler ist, der über das Kommunikationsnetzwerk (30, 31) auf die mobile Vorrichtung (20) herunterladbar ist,
- einen lokalen Konfigurationsdienst (27), über das Kommunikationsnetzwerk (30, 31) auf die mobile Vorrichtung (20) herunterladbar ist und der ein URI-Handler ist, der in der Lage ist:
- eine spezifische URI (11) zu analysieren, die sich auf den Zielprozess (51) bezieht,
- sich über das Kommunikationsnetzwerk (30, 31) und auf der Basis von Parametern, die aus der analysierten URI (11) abgeleitet sind, mit einem externen Konfigurationsdienst (41, 52) zu verbinden, um die mobile Anwendung (28) herunterzuladen, und
- die spezifische URI (11) an das Betriebssystem (24) zurückzumelden und dadurch das Betriebssystem zu veranlassen, die mobile Client-Anwendung (28) aufzurufen; und
- ein Datenetikett (10), das dem Zielprozess (51) zugeordnet ist und in dem eine Netzwerkadresse des externen Konfigurationsdienstes (41, 52) sowie eine Prozesskennung des Zielprozesses (51) codiert ist.

10. Intelligente mobile Vorrichtung (20) mit einem Etikettenleser (21), einer Schnittstelle (22, 23) zu einem Kommunikationsnetzwerk (30, 31), und einem Betriebssystem (24), das in der Lage ist, eine URI abzusenden, die von einem URI-Handler zu behandeln ist, der ausgewählt ist aus einer Vielzahl von URI-Handlern, die auf der mobilen Vorrichtung installiert sind, **gekennzeichnet durch**:
- einen Etikettenleser (21) zum Lesen eines Datenetiketts (10), das einem externen Zielprozess (51) zugeordnet ist, wobei der Zielprozess (51) durch die mobile Vorrichtung (20) ferngesteuert werden soll, wobei auf dem Datenetikett (10) eine Netzwerkadresse eines externen Konfigurationsdienstes (41, 52) sowie eine Prozesskennung des Zielprozesses (51) codiert ist,
- einen lokalen Konfigurationsdienst (27), der über das Kommunikationsnetzwerk (30, 31) auf die mobile Vorrichtung (20) herunterladbar ist und der ein URI-Handler ist, der in der Lage ist:
- eine spezifische URI (11) zu analysieren, die sich auf den Zielprozess (51) bezieht,
- sich über das Kommunikationsnetzwerk (30, 31) und auf der Basis von Parametern, die aus der analysierten URI (11) abgeleitet sind, mit dem externen Konfigurationsdienst (41, 52) zu verbinden, um eine mobile Anwendung (28) für die Steuerung des Zielprozesses (51) herunterzuladen, wobei die mobile Client-Anwendung ein URI-Handler ist, der über das Kommunikationsnetzwerk (30, 31) auf die mobile Vorrichtung (20) herunterladbar ist, und
- die spezifische URI (11) an das Betriebssystem (24) zurückzumelden und dadurch das Betriebssystem zu veranlassen, die mobile Client-Anwendung (28) aufzurufen.

11. Intelligente mobile Vorrichtung (20) nach Anspruch 10, bei der der lokale Konfigurationsdienst (27) und die mobile Client-Anwendung (28) dazu konfiguriert sind, ein Workflowschema auszuführen, das folgendes umfasst:
- einen Schritt (S2) des Lesens einer URI,
- einen Schritt (S3) der Ausführung von lokalen Aktionen, die aus der URI und einem lokalen Kontext abgeleitet sind;
- einen Schritt (S4) der Entscheidung, ob ein externer Dienst aufzurufen ist oder nicht; und
- einen Schritt (S8) der Entscheidung, ob der Workflow angehalten werden soll oder ob eine andere URI an das Betriebssystem (24) ausgegeben werden soll, um eine andere Runde des Workflowschemas auszuführen, indem das Betriebssystem (24) die andere URI an den URI-Handler absendet.

12. System nach Anspruch 9, bei dem das Datenetikett (10) ein bildförmiges Datenetikett ist.

13. System nach Anspruch 9 oder 12, bei dem die mobile Vorrichtung (20) ein Smartphone ist.

14. Intelligente mobile Vorrichtung (20) nach Anspruch 10 oder 11, bei der das Datenetikett (10) ein bildförmiges Datenetikett ist.

15. Intelligente mobile Vorrichtung (20) nach Anspruch 10, 11 oder 14, bei der die mobile Vorrichtung (20) ein Smartphone ist.

## Revendications

1. Procédé de configuration d'un dispositif mobile intelligent (20) pour la commande à distance d'un processus cible (51), la configuration étant exécutée par un service de configuration local (27) qui est un gestionnaire d'URI le dispositif comprenant un lecteur d'étiquettes (21), une interface (22, 23) avec un réseau de communications (30, 31) et un système d'exploitation (24) capable d'expédier un URI à gérer par un gestionnaire d'URI sélectionné parmi une pluralité de gestionnaires d'URI qui sont installés sur le dispositif mobile comprenant le service de configuration local (27), le procédé étant **caractérisé en ce que** le service de configuration local effectue les étapes consistant à :
- recevoir un URI spécifique (11) qui est en rapport avec le processus cible (51),
- se connecter, via le réseau de communications (30, 31) et sur la base de paramètres induits de l'URI reçu (11), à un service de configuration externe (41, 52) pour télécharger une application de client mobile (28) afin de commander le processus cible (51), ladite application de client mobile étant un autre gestionnaire d'URI et
- ramener ledit URI spécifique (11) au système d'exploitation (24), amenant de la sorte ledit système d'exploitation à appeler l'application de client mobile (28).

2. Procédé de configuration d'un dispositif mobile intelligent (20) pour la commande à distance d'un processus cible (51), le dispositif comprenant un lecteur d'étiquettes (21), une interface (22, 23) avec un réseau de communications (30, 31) et un système d'exploitation (24) capable d'expédier un URI à gérer à un gestionnaire d'URI sélectionné parmi une pluralité de gestionnaires d'URI qui sont installés sur le dispositif mobile, le procédé étant **caractérisé par** les étapes consistant à :
- lire avec le lecteur d'étiquettes (21) une étiquette de données (10) qui est associée au processus cible (51) et comprend l'URI spécifique (11) à expédier par le système d'exploitation ;
- installer sur le dispositif mobile un service de configuration local (27) qui est un gestionnaire d'URI qui, lorsqu'il est exécuté sur un processeur, effectue le procédé de la revendication 1.

3. Procédé selon la revendication 1 ou 2, dans lequel le dispositif mobile (20) est capable d'accéder au service de configuration (41, 52) via un réseau initial (30) et d'accéder au processus cible (51) via un réseau d'accès différent (31), et dans lequel une communication est commutée du réseau initial (30) au réseau d'accès (31) sous le contrôle du service de configuration local (27).

4. Procédé selon la revendication 1, 2 ou 3, dans lequel le dispositif mobile (20) est capable de communiquer avec le service de configuration externe (41, 52) également via le réseau d'accès (31) et le réseau d'accès (31) est utilisé pour télécharger l'application de client mobile (28) sur le dispositif mobile (20).

5. Procédé selon l'une quelconque des revendications précédentes, dans lequel le service de configuration local (27) et l'application de client mobile (28) sont configurés pour exécuter un plan de flux de travail qui comprend :
- une étape (S2) de lecture d'un URI,
- une étape (S3) d'exécution d'actions locales induites de l'URI et d'un contexte local;
- une étape (S4) permettant de décider si un service externe doit ou non être appelé ; et
- une étape (S8) permettant de décider si le flux de travail doit être arrêté ou s'il faut délivrer un autre URI au système d'exploitation (24) pour exécuter un autre cycle du plan de flux de travail par le système d'exploitation (24) en envoyant l'autre URI à un gestionnaire d'URI.

6. Procédé selon l'une quelconque des revendications précédentes, dans lequel le dispositif mobile (20) communique avec le service de configuration (41, 52) via l'un(e) d'une liaison de téléphone mobile, d'un courriel et d'un SMS.

7. Code de programme d'ordinateur qui, lorsqu'il est exécuté par un processeur, exécute un procédé selon l'une quelconque des revendications précédentes.

8. Mémoire non transitoire lisible par ordinateur comprenant le code de programme d'ordinateur de la revendication 7.

9. Système de configuration d'un dispositif mobile intelligent (20) pour la commande à distance d'un processus cible (51), lequel dispositif mobile comprend un lecteur d'étiquettes (21), une interface (22, 23) avec un réseau de communications (30, 31) et un système d'exploitation (24) capable d'expédier un URI à gérer par un gestionnaire d'URl sélectionné parmi une pluralité de gestionnaires d'URI qui sont installés sur le dispositif mobile, **caractérisé en ce qu'**il comprend :
- une application de client mobile (28) pour commander le processus cible (51), l'application de client mobile étant un gestionnaire d'URI qui peut être téléchargé dans le dispositif mobile (20) via le réseau de communications (30, 31) ;
- un service de configuration local (27) qui peut être téléchargé dans le dispositif mobile (20) via le réseau de communications (30, 31) et qui est un gestionnaire d'URI capable :
- d'analyser un URI spécifique (11) qui est en rapport avec le processus cible (51),
- de se connecter, via le réseau de communications (30, 31) et sur la base de paramètres induits de l'URI analysé (11), à un service de configuration externe (41, 52) pour télécharger l'application de client mobile (28) ; et
- de ramener ledit URI spécifique (11) au système d'exploitation (24), en sorte d'amener celui-ci à appeler l'application de client mobile (28) ; et
- une étiquette de données (10) affectée au processus cible (51) et sur laquelle sont codés une adresse de réseau du service de configuration externe (41, 52) ainsi qu'un ID du processus cible (51).

10. Dispositif mobile intelligent (20) comprenant un lecteur d'étiquettes (21), une interface (22, 23) avec un réseau de communications (30, 31) et un système d'exploitation (24) capable d'expédier un URI à gérer par un gestionnaire d'URI sélectionné parmi une pluralité de gestionnaires d'URI qui sont installés sur le dispositif mobile, **caractérisé en ce qu'**il comprend :
- un lecteur d'étiquettes de données (21) pour lire une étiquette de données (10) affecté à un processus cible externe (51), le processus cible (51) devant être commandé à distance par le dispositif mobile (20), l'étiquette de données (1) portant à l'état codé une adresse de réseau d'un service de configuration externe (41, 52) ainsi qu'un ID du processus cible (51),
- un service de configuration local (27) qui peut être téléchargé dans le dispositif mobile (20) via le réseau de communications (30, 31) et qui est un gestionnaire d'URI capable :
- d'analyser un URI spécifique (11) qui est en rapport avec le processus cible (51),
- de se connecter, via le réseau de communications (30, 31) et sur la base de paramètres induits de l'URI analysé (11), au service de configuration externe (41, 52) pour télécharger une application mobile (28) afin de commander le processus cible (51), l'application de client mobile étant un gestionnaire d'URI qui peut être téléchargé dans le dispositif mobile (20) via le réseau de communications (30, 31) et
- de ramener ledit URI spécifique (11) au système d'exploitation (24), en sorte d'amener celui-ci à appeler l'application de client mobile (28).

11. Dispositif mobile intelligent (20) selon la revendication 10, dans lequel le service de configuration local (27) et l'application de client mobile (28) sont configurés pour exécuter un plan de flux de travail qui comprend :
- une étape (S2) de lecture d'un URI,
- une étape (S3) d'exécution d'actions locales induites de l'URI et d'un contexte local;
- une étape (S4) permettant de décider si un service externe doit ou non être appelé ; et
- une étape (S8) permettant de décider si le flux de travail doit être arrêté ou s'il faut délivrer un autre URI au système d'exploitation (24) pour exécuter un autre cycle du plan de flux de travail par le système d'exploitation (24) en envoyant l'autre URI à un gestionnaire d'URI.

12. Système selon la revendication 9, dans lequel l'étiquette de données (10) est une étiquette de données de type image.

13. Système selon la revendication 9 ou 12, dans lequel le dispositif mobile (20) est un smartphone.

14. Dispositif mobile intelligent (20) selon la revendication 10 ou 11, dans lequel l'étiquette de données (10) est une étiquette de données de type image.

15. Dispositif mobile intelligent (20) selon la revendication 10,11 ou 14, dans lequel le dispositif mobile (20) est un smartphone.
